# EUROPEAN PATENT APPLICATION

(11) **EP 4 701 222 A1**
(43) Date of publication of application: **25.02.2026**
(21) Application number: 24791734.7
(22) Date of filing: 23.02.2024
(51) Int. Cl.: H04R 1/02, F16H 37/12

(54) **ELECTRONIC PRODUCT**

(30) Priority: 17.04.2023 CN 202310433901
(71) Applicant: Weifang Goerdyna Technology Co., Ltd, Weifang, Shandong 261031 (CN)
(72) Inventor: LI, Kunling, Weifang, Shandong 261031 (CN); LANG, Yunsen, Weifang, Shandong 261031 (CN); LI, Wenfeng, Weifang, Shandong 261031 (CN); GUO, Xiuyu, Weifang, Shandong 261031 (CN)
(74) Representative: Rau, Schneck & Hübner Patentanwälte Rechtsanwälte PartGmbB
(86) International application number: PCT/CN2024/078227
(87) International publication number: WO 2024/217146

(57) **Abstract**

An electronic product is disclosed in the present disclosure, which includes a mounting carrier and an electronic product. The mounting carrier is provided with a mounting cavity, and is further provided with a mounting opening in communication with the mounting cavity; and the product body is disposed within the mounting cavity and configured to rotate such that at least a portion thereof extends out of the mounting opening. The technical solution of the present disclosure may improve the use experience of the electronic product and realize the storage and protection of the electronic product.

## Description

### TECHNICAL FIELD

The present disclosure relates to the field of electronic products, and particularly to an electronic product.

### BACKGROUND

Currently, electronic products such as home speakers, vehicle-mounted speakers, and vehicle-mounted robots are typically provided in a fixed configuration. This configuration, however, presents several limitations in practical use of such electronic products. For example: on one hand, the electronic products may be constrained by installation conditions, resulting in a fixed installation orientation that may prevent them from being optimally directed towards the user thereafter. Moreover, the static nature of these electronic products fails to provide users with an appropriate dynamic ritualistic experience. Therefore, the use experience of such electronic products needs enhancement. On the other hand, as the electronic products configured in the fixed manner are predominantly completely exposed, they are afforded relatively inadequate protection.

### SUMMARY

The main object of the present disclosure is to provide an electronic product, which is intended for improving the use experience thereof and realizing the storage and protection thereof.

To achieve the above object, the electronic product proposed by the present disclosure includes:
a mounting carrier, provided with a mounting cavity and a mounting opening in communication with the mounting cavity; and
a product body disposed within the mounting cavity and configured to rotate such that at least a portion thereof extends out of the mounting opening.

Optionally, the electronic product further includes a driving mechanism for driving the product body to rotate.

Optionally, the driving mechanism includes a driving member and a transmission assembly, and the transmission assembly includes a first transmission wheel and a second transmission wheel;
the first transmission wheel is connected to the driving member and rotatable under drive of the driving member;
the second transmission wheel is connected to the product body, an axis of the second transmission wheel and that of the first transmission wheel are arranged side by side, and the second transmission wheel is rotatable under actuation of the first transmission wheel.

Optionally, it is defined that the electronic product has an up-down orientation, the mounting opening is upwardly disposed, and the axis of the second transmission wheel is inclined downwardly.

Optionally, the product body has a spherical center, and the axis of the second transmission wheel extends through the spherical center of the product body; on a vertical section extending through the axis of the second transmission wheel, defining an angle formed between the axis of the second transmission wheel and the up-down orientation as α, which satisfies a relationship: 45° ≤ α ≤ 70°;
and/or, on a vertical projection plane, defining an angle formed between a connecting line between a projection of a center of the first transmission wheel and a projection of a center of the second transmission wheel, and the up-down orientation as β, which satisfies a relationship: 30° ≤ β ≤ 50°;
and/or, defining a distance between the center of the first transmission wheel and the center of the second transmission wheel as L, which satisfies a relationship: 40 mm ≤ L ≤ 50 mm.

Optionally, the first transmission wheel and the second transmission wheel are made of plain medium-carbon steel;
and/or, the first transmission wheel and the second transmission wheel are gears;
and/or, the transmission assembly further includes a transmission belt, two ends of which are sleeved respectively on the first transmission wheel and the second transmission wheel;
and/or, the driving mechanism is disposed on an outer side of the mounting carrier, the product body is convexly provided with a connecting shaft which extends through the mounting carrier, and the second transmission wheel is mounted on the connecting shaft protruding from the mounting carrier.

Optionally, the transmission assembly further includes a mounting shaft, a worm gear, and a worm, an axis of the worm gear coincides with the axis of the first transmission wheel, and the worm gear and the first transmission wheel are both mounted on the first mounting shaft;
the worm is connected to the driving member and rotatable under drive of the driving member, and the worm is further meshed with the worm gear.

Optionally, it is defined that the electronic product has an up-down orientation, and the mounting opening is upwardly disposed;
in the up-down orientation of the electronic product, the first transmission wheel and the second transmission wheel are staggered, and at least a portion of the driving member is disposed below the second transmission wheel.

Optionally, the driving mechanism further includes a mounting base, and the driving member, the worm, and the mounting shaft are all mounted on the mounting base.

Optionally, the mounting base is provided with an accommodation groove, and the driving member is mounted on an outer side of the mounting base;
the worm is rotatably mounted on at least one of two opposite groove walls of the accommodation groove, and the mounting shaft is rotatably mounted on at least one of another two opposite groove walls of the accommodation groove.

Optionally, a groove wall of the accommodation groove is provided with a first mounting groove at an end distant from a groove bottom of the accommodation groove, and at least one end of two opposite ends of the worm is mounted within the first mounting groove; the driving mechanism further includes a first clamping member, which is connected to the mounting base and cooperates with the mounting base to constrain the worm accommodated within the first mounting groove;
and/or, the groove wall of the accommodation groove is further provided with a second mounting groove at the end distant from the groove bottom of the accommodation groove, and at least one end of the two opposite ends of the mounting shaft is mounted within the second mounting groove; the driving mechanism further includes a second clamping member, which is connected to the mounting base and cooperates with the mounting base to constrain the mounting shaft accommodated within the second mounting groove.

Optionally, the product body is a loudspeaker assembly.

Optionally, the loudspeaker assembly has a sound-emitting surface, and the loudspeaker assembly is rotatable such that the sound-emitting surface extends out of the mounting opening;
the sound-emitting surface is provided with sound outlets, and a ratio of an area of the sound outlets to an area of the sound-emitting surface is greater than or equal to 0.5.

Optionally, the sound outlets include a plurality of first hole bodies and a plurality of second hole bodies, a hole area of the first hole bodies is greater than that of the second hole bodies, and the plurality of second hole bodies surround an outer side of the plurality of first hole bodies.

Optionally, the loudspeaker assembly includes a loudspeaker housing and a loudspeaker unit mounted within the loudspeaker housing, and the loudspeaker unit includes a diaphragm;
a wall surface of the loudspeaker housing opposite to the diaphragm constitutes the sound-emitting surface, and in a projection plane perpendicular to an axis of the loudspeaker unit, a projection of a region of the sound-emitting surface provided with the plurality of first hole bodies covers a projection of the diaphragm.

Optionally, the loudspeaker assembly has a sound-emitting surface, and the loudspeaker assembly is rotatable such that the sound-emitting surface extends out of the mounting opening;
it is defined that the loudspeaker assembly has an initial state when not driven to rotate, and in the initial state, the sound-emitting surface is exposed from the mounting opening.

Optionally, in the initial state, an end of the loudspeaker assembly having the sound-emitting surface protrudes from the mounting opening.

Optionally, it is defined that the electronic product has an up-down orientation, and the mounting opening is upwardly disposed;
in the up-down orientation of the electronic product, defining a height of the loudspeaker assembly as H, and a height by which the loudspeaker assembly protrudes from the mounting opening as h, which satisfies a relationship: 0 < h/H ≤ 0.5.

Optionally, the loudspeaker assembly further has a back surface, which is connected to the sound-emitting surface, is configured as a convex spherical surface, and has a spherical center, and a rotation axis of the loudspeaker assembly extends through the spherical center;
a cavity wall of the mounting cavity includes a spherical wall surface, and a spherical center of the spherical wall surface coincides with the spherical center of the back surface.

Optionally, the cavity wall of the mounting cavity further includes an inclined wall surface, which is connected to the spherical wall surface, and an end of which distant from the spherical wall surface encloses the mounting opening;
wherein the inclined wall surface flares outwardly in a direction from a cavity bottom of the mounting cavity toward the mounting opening.

Optionally, it is defined that the electronic product has an up-down orientation, and the mounting opening is upwardly disposed;
on a vertical section, defining an angle formed between the inclined wall surface and the up-down orientation as y, which satisfies a relationship: 40° ≤ γ ≤ 70°, and/or, defining a depth of the mounting cavity as D, and a projection length of the inclined wall surface in the up-down orientation as d, which satisfies a relationship: 0.1 ≤ d/D ≤ 0.4.

Optionally, it is defined that the electronic product has an up-down orientation, and the mounting opening is upwardly disposed;
when the loudspeaker assembly is rotated to a preset rotation stroke, an angle formed between a center line of the loudspeaker assembly extending through the sound-emitting surface and a horizontal direction is Z, which satisfies a relationship: 0° ≤ Z ≤ 20°.

Optionally, the product body, when rotating, is rotatable along a first direction or a second direction opposite to the first direction, and defining a preset rotation stroke of the product body as X; when the product body is rotated along the first direction, satisfying a relationship: 250° ≤ X ≤ 270°, and when the product body is rotated along the second direction, satisfying a relationship: 90° ≤ X ≤ 110°;
and/or, noise generated by the product body during rotation is less than or equal to 30 dB;
and/or, defining time for the product body to rotate to the preset rotation stroke as T, which satisfies a relationship: 2s ≤ T ≤ 4s.

Optionally, the electronic product further includes a position recognizer and a rotation controller, and the position recognizer is configured to recognize a target position where a user is located; the rotation controller is configured to control a rotation angle of the product body according to recognition information from the position recognizer, so that the product body faces towards the target position.

When using the electronic product according to the technical solution of the present disclosure, since the product body in the electronic product is rotatably arranged, the product body can adjust its installation posture through its rotation during use, thereby facilitating the product body to be optimally directed toward the user for use. Simultaneously, the rotation process of the product body can also provide the user with an appropriate dynamic ritualistic experience. This enhances both the operational effectiveness and ritualistic experience of the electronic product, ultimately improving use experience of the electronic product. Additionally, through the rotation of the product body, the product body of the electronic product can achieve two states: a usage state where the product body is rotated to extend out from the mounting opening of the mounting cavity, and a storage state where the product body is installed and accommodated within the mounting cavity. In this way, when the electronic product is not in use, the product body in the electronic product can be rotated into the mounting cavity for storage and accommodation. Therefore, by rotatably arranging the product body in the electronic product within the mounting cavity of the mounting carrier, the present solution not only enhances the use experience of the electronic product but also achieves protective storage for the electronic product.

### BRIEF DESCRIPTION OF THE DRAWINGS

The accompanying drawings, which are used to more clearly illustrate the embodiments of the present disclosure or the technical solutions in the prior art, are briefly introduced below. Obviously, drawings described below are merely some embodiments of the present disclosure. For those skilled in the art, other drawings may also be derived from the drawings shown herein without inventive effort.
FIG. 1 is a structural schematic diagram of an embodiment of an electronic product of the present disclosure;
FIG. 2 is a schematic diagram of a state after a product body of the electronic product in FIG. 1 is rotated;
FIG. 3 is a schematic diagram of an exploded structure of the electronic product in FIG. 1 ;
FIG. 4 is a structural schematic diagram of the electronic product in FIG. 3 with an outer casing removed;
FIG. 5 is another partial structural schematic diagram of the electronic product in FIG. 4;
FIG. 6 is a schematic diagram of an assembled structure of a driving structure and the product body of the electronic product in FIG. 5;
FIG. 7 is a partial structural schematic diagram of a driving mechanism in FIG. 6;
FIG. 8 is a schematic diagram of an exploded structure of the driving mechanism in FIG. 7;
FIG. 9 is a schematic diagram of an assembled structure of the product body and a mounting carrier in FIG. 5;
FIG. 10 is a schematic diagram of an exploded structure of the product body and the mounting carrier in FIG. 9;
FIG. 11 is a cross-sectional schematic diagram of the product body and the mounting carrier in FIG. 9;
FIG. 12 is a structural schematic diagram of the product body in FIG. 10.

### Description of reference signs:

| No. | Name | No. | Name |
|---|---|---|---|
| 100 | Electronic product | 50 | Driving mechanism |
| 10 | Mounting carrier | 51 | Driving member |
| 11 | Mounting cavity | 53 | Transmission assembly |
| 13 | Mounting opening | 531 | First transmission wheel |
| 15 | Spherical wall surface | 532 | Second transmission wheel |
| 17 | Inclined wall surface | 533 | Transmission belt |
| 18 | Clearance hole | 534 | Mounting shaft |
| 19 | Mounting hole | 535 | Worm gear |
| 30 | Product body | 536 | Worm |
| 31 | Connecting shaft | 55 | Mounting base |
| 33 | Loudspeaker assembly | 551 | Accommodation groove |
| 331 | Sound-emitting surface | 552 | First mounting groove |
| 332 | Sound outlet | 553 | Second mounting groove |
| 333 | First hole body | 57 | First clamping member |
| 334 | Second hole body | 59 | Second clamping member |
| 335 | Loudspeaker housing | 70 | Connecting bracket |
| 336 | Loudspeaker unit | 90 | Outer casing |
| 337 | Diaphragm | 91 | Exposed opening |
| 338 | Back surface | | |

The realization of the objects, the functional features and the advantages of the present disclosure will be further explained with reference to the attached drawings in connection with the embodiments.

### DETAILED DESCRIPTION

The technical solutions in the embodiments of the present disclosure will be clearly and completely described below in conjunction with the accompanying drawings in the embodiments of the present disclosure. Obviously, the described embodiments are only a part of the embodiments of the present disclosure, and not all of them. Based on the embodiments in the present disclosure, all other embodiments obtained by a person of ordinary skill in the art without making creative labor fall within the scope of protection of the present disclosure.

It should be noted that all directional indications (such as up, down, left, right, front, rear, etc.) in the embodiments disclosed herein are used solely to explain the relative positions and movements of the various components in a specific posture (as shown in the accompanying drawings). If the specific posture changes, the directional indications will also change accordingly.

In the present disclosure, unless expressly specified and limited otherwise, terms "connected", "fixed" and other similar terms should be interpreted in a broad sense. For example, "fixed" may refer to a fixed connection, a detachable connection, or integration; it may be a mechanical or electrical connection; it may be direct connection or indirect connection through an intermediate medium, and it may refer to internal communication or interaction between two elements, unless otherwise explicitly defined. Those of ordinary skill in the art can understand the specific meanings of the above terms in the present disclosure based on specific situations.

In addition, terms "first" and "second" involved in the present disclosure are only used for descriptive purposes, and should not be understood as indicating or implying relative importance or implying a number of indicated technical features. Therefore, features defined as "first", "second" may expressly or implicitly include at least one of those features. Additionally, the term "and/or" used throughout the text refers to three alternative embodiments. For example, "A and/or B" includes Embodiment A, Embodiment B, or both A and B. Furthermore, the technical solutions in each embodiment may be combined with one another, but such combinations must be based on what a person skilled in the art can reasonably achieve. If the combination of technical solutions results in contradictions or is unfeasible, such a combination shall be deemed nonexistent and shall not fall within the scope of protection claimed in the present disclosure.

Electronic products, i.e., products related to electrical energy, include home speakers, vehicle-mounted speakers, display devices, vehicle-mounted robots, and other products that require power supply. In the current industry, such electronic products are typically provided in a fixed configuration, i.e., they are immobile. This configuration, however, presents several limitations in practical use of such electronic products. Specifically, on one hand, the electronic products may be constrained by installation conditions, resulting in a fixed installation orientation that may prevent them from being optimally directed towards the user thereafter. Moreover, the static nature of these electronic products fails to provide users with an appropriate dynamic ritualistic experience. Therefore, in this case, the use experience provided by such electronic products to users is suboptimal. On the other hand, as the electronic products configured in the fixed manner are predominantly completely exposed, they are afforded relatively inadequate protection.

Therefore, in view of the foregoing, to address the shortcomings of certain conventional electronic products-namely, suboptimal use experience and inadequate protection-the present disclosure provides a novel electronic product. This novel electronic product innovatively mounts the product body rotatably within the mounting cavity, thereby enabling the electronic product to be optimally directed toward the user during use through rotation of the product body, and providing the user with an appropriate dynamic ritualistic experience, thereby improving the user's overall experience with the electronic product. At the same time, by rotating the product body, when the electronic product is not in use, the product body can be rotated and stored within the mounting cavity, thereby achieving protective storage of the electronic product.

It should be noted that the electronic product provided by the present disclosure may be a speaker (including home speakers and vehicle-mounted speakers), a display device, or a vehicle-mounted robot, among others. The present disclosure does not limit the specific type of the electronic product, as long as the electronic product needs to be rotated for use and rotated into the mounting cavity for storage.

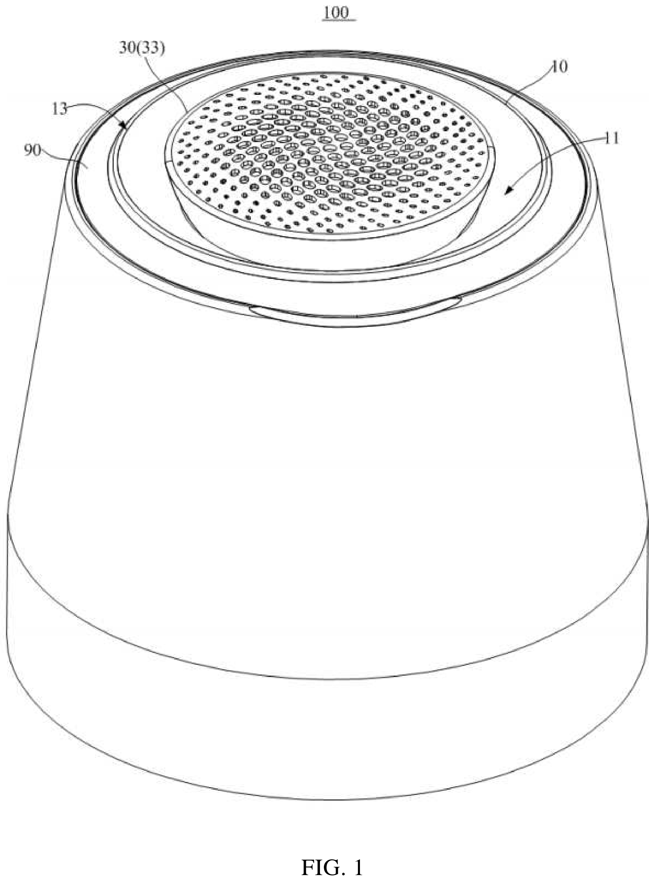

Specific embodiments will now be used to explain and illustrate the detailed structure of the electronic product proposed by the present disclosure. In one embodiment of the present disclosure, with reference to FIGS. 1 to 3, the electronic product 100 proposed by the present disclosure includes a mounting carrier 10 and a product body 30. The mounting carrier 10 is provided with a mounting cavity 11, and is further provided with a mounting opening 13 in communication with the mounting cavity 11. The product body 30 is provided within the mounting cavity 11 and is configured to rotate such that at least a portion thereof extends out of the mounting opening 13.

The mounting carrier 10 may be used to form the mounting cavity 11 with the mounting opening 13, so as to form an installation position by means of the mounting cavity 11 to accommodate the product body 30. Herein, the mounting carrier 10 may be a generally hemispherical structure; of course, it may alternatively be a square structure, a cylindrical structure, or any other shape. The present disclosure does not limit the shape or structure of the mounting carrier 10. Similarly, the mounting cavity 11 may alternatively be a generally hemispherical cavity, a square cavity, a cylindrical cavity, or any other shape. The present disclosure does not limit the shape or style of the mounting cavity 11. Of course, in some embodiments, to improve the adaptability to the product body 30, the shapes of the mounting cavity 11 and the mounting carrier 10 may be correspondingly configured according to the shape of the product body 30. For example, when the product body 30 is a generally hemispherical structure, the mounting cavity 11 and the mounting carrier 10 may also be configured to be generally hemispherical. In addition, when the electronic product 100 is in normal use, the mounting opening 13 may be upwardly disposed, or of course, it may be disposed toward one side or disposed downwardly, which is not specifically limited in the present disclosure and may be adaptively configured according to the actual application scenario requirements of the electronic product 100.

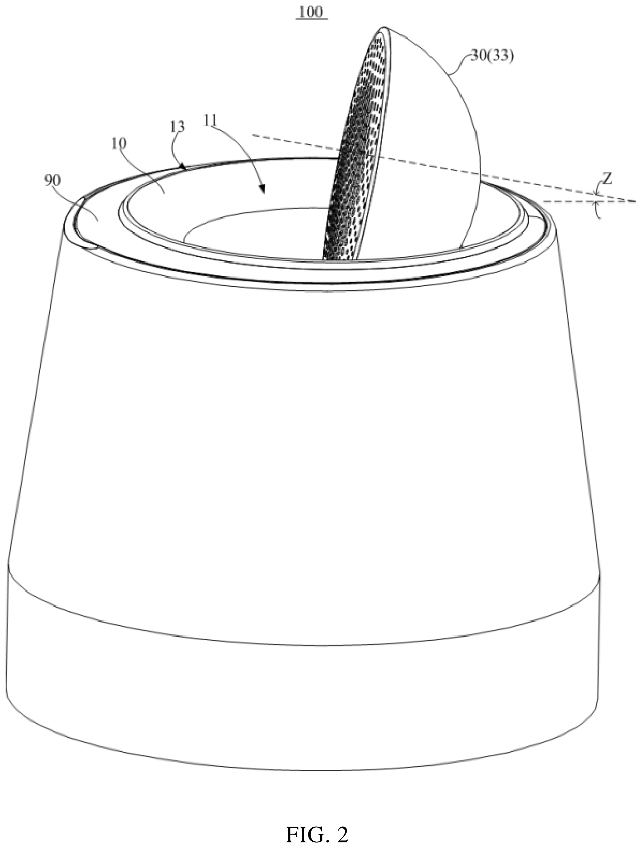

The product body 30 may serve as a carrier responsible for the functional use of the electronic product 100. For example, when the electronic product 100 is a loudspeaker, the product body 30 may be a loudspeaker assembly 33 for realizing sound-emitting functionality; when the electronic product 100 is a display device, the product body 30 may be a display module; when the electronic product 100 is a vehicle-mounted robot device, the product body 30 may be a vehicle-mounted robot for realizing human-machine interaction. Therefore, the present disclosure does not limit the specific type of the product body 30, which is determined by the type of the electronic product 100. Herein, the product body 30 is provided within the mounting cavity 11, which includes a case where the product body 30 is entirely accommodated within the mounting cavity 11, as well as a case where a portion of the product body 30 protrudes from the mounting opening 13 of the mounting cavity 11. The product body 30 being configured to rotate such that at least a portion thereof extends out of the mounting opening 13 means that, after rotation of the product body 3, the working surface of the product body 30 (when the product body 30 is the loudspeaker assembly 33, this working surface may be the sound-emitting surface 331 introduced below; when the product body 30 is a display module, this working surface may be a display surface; when the product body 30 is a vehicle-mounted robot, this working surface may be a human-machine interaction surface) may extend out of the mounting opening 13 to be in an upright state (as shown in FIG. 2). In other words, it may also be said that the center line of the product body 30 extending through this working surface may form an angle with the plane where the mounting opening 13 is located. Therefore, the product body 30 being configured to rotate such that at least a portion thereof extends out of the mounting opening 13 refers to the upright state that the product body 30 may achieve after rotation, and it is not related to whether a portion of the product body 30 protrudes from the mounting opening 13 in the initial state before rotation. Additionally, after rotation, the product body 30 may enter a state where it entirely extends out of the mounting opening 13, or it may enter a state where a portion still remains within the mounting cavity 11. Herein, the rotation of the product body 30 may be automatically driven by a driving mechanism 50 as introduced below. Of course, this is not limited in the present disclosure. The rotation of the product body 30 may alternatively be manually driven by a user. In this case, the product body 30 may be constrained after it is rotated into position; this is because the product body 30 uses a damping shaft for rotational connection, allowing it to be constrained after rotation, or it may be constrained by a constraining rib or other structures after rotation into position. Furthermore, the product body 30 may be rotationally connected to the mounting carrier 10, or of course, it may be rotationally connected to other objects, which is not limited in the present disclosure as long as the product body 30 can be rotated.

When using the electronic product 100 according to the technical solution of the present disclosure, since the product body 30 in the electronic product 100 is rotatably arranged, the product body 30 can adjust its installation posture through its rotation during use, thereby facilitating the product body 30 to be optimally directed toward the user for use. Simultaneously, the rotation process of the product body 30 can also provide the user with an appropriate dynamic ritualistic experience. This enhances both the operational effectiveness and ritualistic experience of the electronic product 100, ultimately improving use experience of the electronic product 100. Additionally, through the rotation of the product body 30, the product body 30 of the electronic product 100 can achieve two states: a usage state where the product body 30 is rotated to extend out from the mounting opening 13 of the mounting cavity 11, and a storage state where the product body 30 is installed and accommodated within the mounting cavity 11. In this way, when the electronic product 100 is not in use, the product body 30 in the electronic product 100 can be rotated into the mounting cavity 11 for storage and accommodation. Therefore, by rotatably arranging the product body 30 in the electronic product 100 within the mounting cavity 11 of the mounting carrier 10, the present solution not only enhances the use experience of the electronic product 100 but also achieves protective storage for the electronic product 100.

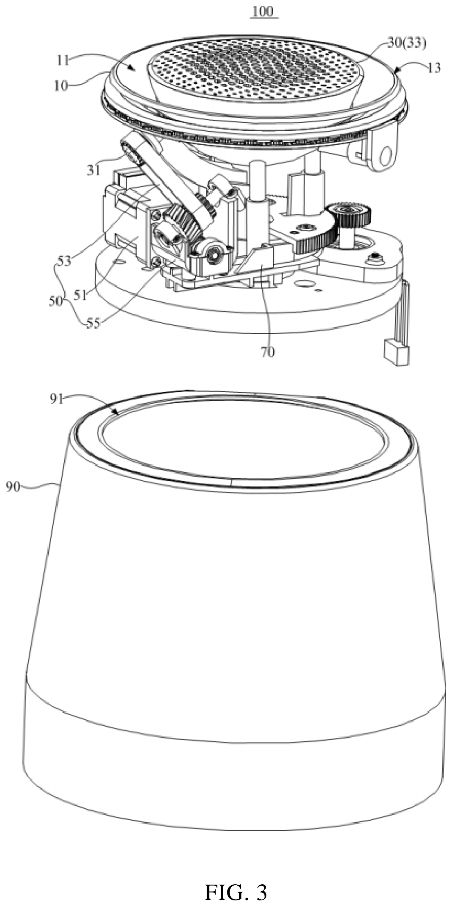

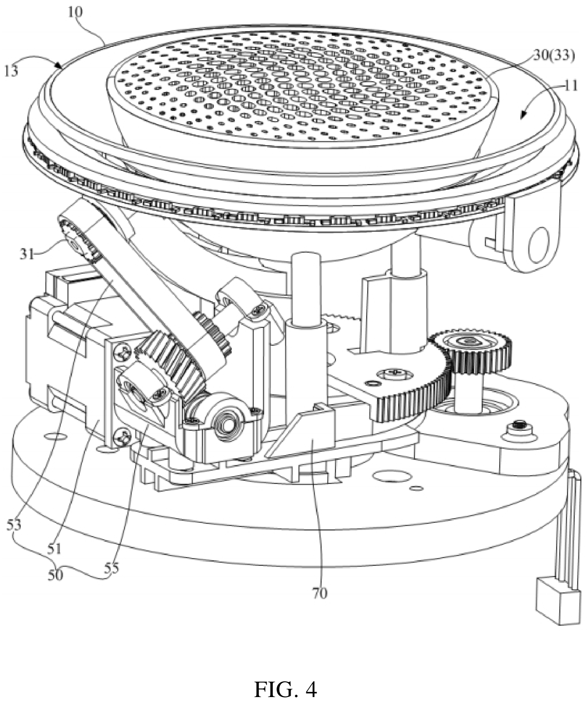

With reference to FIGS. 3 and 4, in one embodiment of the present disclosure, the electronic product 100 further includes a driving mechanism 50, which is configured to drive the product body 30 to rotate.

The driving mechanism 50 may be used to provide power, to enable the electronic product 100 to rotate the product body 30 automatically. Herein, the driving mechanism 50 may be a combination of the driving member 51 and the transmission assembly 53 as introduced below, and of course, it may alternatively consist solely of the driving member 51, which directly drives the product body 30 to rotate. Additionally, the driving mechanism 50 can be provided within the mounting cavity 11 along with the product body 30. Of course, the driving mechanism 50 may alternatively be provided on an outer side of the mounting carrier 10. In this case, the end of the product body 30 connected to the driving mechanism 50 and/or the end of the driving mechanism 50 connected to the product body 30 may extend through the mounting carrier 10. Therefore, the present disclosure does not limit the specific type or placement position of the driving mechanism 50.

In the present embodiment, by providing the driving mechanism 50, it is possible to automatically drive the product body 30. In this way, the degree of automation of the electronic product 100 may be improved, thereby contributing to further enhancing the user's experience with the electronic product 100.

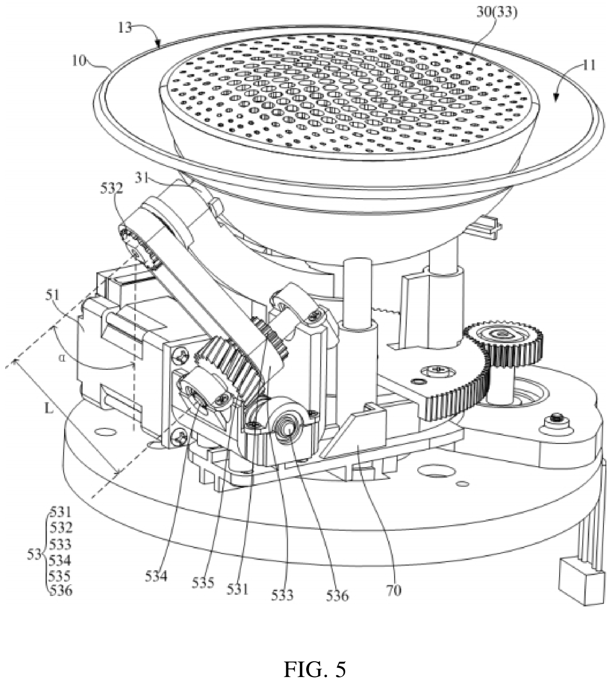

With reference to FIGS. 4 and 5, in one embodiment of the present disclosure, the driving mechanism 50 includes a driving member 51 and a transmission assembly 53. The transmission assembly 53 comprises a first transmission wheel 531 and a second transmission wheel 532. The first transmission wheel 531 is connected to the driving member 51 and can be driven to rotate by the driving member 51. The second transmission wheel 532 is connected to the product body 30, with the axis of the second transmission wheel 532 arranged side-by-side with that of the first transmission wheel 531, and can be driven to rotate by the first transmission wheel 531.

The driving member 51 can be used to provide power, and the transmission assembly 53 can be used to transmit the motion of the driving member 51 to the product body 30, thereby achieving indirect driving of the product body 30 by the driving member 51. Herein, the driving member 51 may be a motor; for example, it may be a stepper motor or a servo motor, among others, which is not limited in the present disclosure. Of course, the driving member 51 may alternatively be a rotary cylinder. That is, as long as the driving member 51 can provide rotational driving force, it is acceptable. The first transmission wheel 531 and the second transmission wheel 532 in the transmission assembly 53 may be roller structures, and in this case, they may be used in conjunction with a transmission belt 533. Of course, the first transmission wheel 531 and the second transmission wheel 532 may alternatively be gear structures, and in this case, they may directly mesh with each other, or may further be used in conjunction with the transmission belt 533. Alternatively, the first transmission wheel 531 and the second transmission wheel 532 may alternatively be sprocket structures, and in this case, they need to be used in conjunction with a transmission chain. Therefore, the present disclosure does not limit the specific types of the first transmission wheel 531 and the second transmission wheel 532 in the transmission assembly 53, as long as the first transmission wheel 531 can transmit the rotation of the driving member 51 to the second transmission wheel 532. In addition, the first transmission wheel 531 may be directly mounted on the driving member 51, or may be rotatably mounted on another object. The second transmission wheel 532 may be directly mounted on the product body 30, or may be mounted on a connecting shaft 31 protruding from the product body 30, as will be described in more detail below.

In the present embodiment, by configuring the driving mechanism 50 to include the driving member 51 and the transmission assembly 53, on one hand, the transmission assembly 53 may enable the product body 30 to achieve a suitable transmission ratio finally, thereby avoiding excessive rotational speed of the product body 30 that could adversely affect the operational stability of the electronic product 100; and on the other hand, the driving member 51 may be installed at any position along the circumferential direction around the product body 30, which reduces the requirement for the installation position of the driving member 51, thereby improving the convenience of installing the driving member 51, and providing a better basic condition for subsequent realization of the compact installation of the driving mechanism 50.

With reference to FIG. 5, in one embodiment of the present disclosure, the electronic product 100 is defined as having an up-down orientation, with the mounting opening 13 facing upward and the axis of the second transmission wheel 532 inclined downward.

The up-down orientation of the electronic product 100 refers to the up-down orientation defined when the electronic product 100 is in its normal installed state. The axis of the second transmission wheel 532 is inclined downward, meaning that the axis of the second transmission wheel 532 forms an angle with both the horizontal direction and the vertical direction.

In the present embodiment, by setting the axis of the second transmission wheel 532 to be inclined downward, more parts of the product body 30 can extend out of the mounting opening 13 to work after the product body 30 rotates around the axis, so that the product body 30 can be optimally used, such as better sound production, video playing or user interaction. Of course, it should be noted that the present disclosure is not limited thereto, and in other embodiments, the axis of the second transmission wheel 532 may alternatively be horizontally arranged; or, when the mounting opening 13 faces the horizontal side, the axis of the second transmission wheel 532 may alternatively be vertically arranged, or arranged at an acute angle to the vertical direction.

Please refer to FIG. 5, in an embodiment of the present disclosure, the product body 30 has a spherical center, and the axis of the second transmission wheel 532 extends through the spherical center of the product body 30; on a vertical section extending through the axis of the second transmission wheel 532, defining an angle formed between the axis of the second transmission wheel 532 and the up-down orientation as α, which satisfies a relationship: 45° ≤ α ≤ 70°.

The product body 30 has a spherical center, or the product body 30 has a spherical structure as a whole. Of course, one surface of the product body 30 may be spherical, as long as the product body 30 can form a spherical center.

In the present embodiment, by setting the axis of the second transmission wheel 532 to extend through the spherical center of the product body 30, the product body 30 may have a relatively regular rotation track and move only within the corresponding spherical diameter, which helps reduce the possibility of interference between the product body 30 and the mounting carrier 10 during rotation of the product body 30, and also makes it easier to arrange the product body 30 and the mounting carrier 10 more compactly, thereby reducing the overall volume of the electronic product 100 and improving the convenience of subsequent installation in a limited space. Further, by setting the angle α formed between the axis of the second transmission wheel 532 and the up-down orientation to range from 45° to 70°, it is possible to enable that when the product body 30 is rotated to extend out of the mounting opening 13 to be in the upright state, the working surface of the product body 30 (when the product body 30 is the loudspeaker assembly 33, this working surface may be a sound-emitting surface 331; when the product body 30 is a display module, this working surface may be a display surface; when the product body 30 is a vehicle-mounted robot, this working surface may be a human-machine interaction surface) may have more parts protruding out of the mounting opening 13, and at the same time, it can better incline the working angle, so that the product body 30 can achieve better sound production, video playing or user interaction. That is, it is possible to enhance the use effect of the product body 30, thereby contributing to further improving the use experience of the electronic product 100. Herein, the angle α formed between the axis of the second transmission wheel 532 and the up-down orientation can be 45°, 50°, 55°, 60°, 65°, or 70°, or any value within the above range. Of course, in other embodiments, the angle α formed between the axis of the second transmission wheel 532 and the up-down orientation can also be less than 45° or greater than 70°.

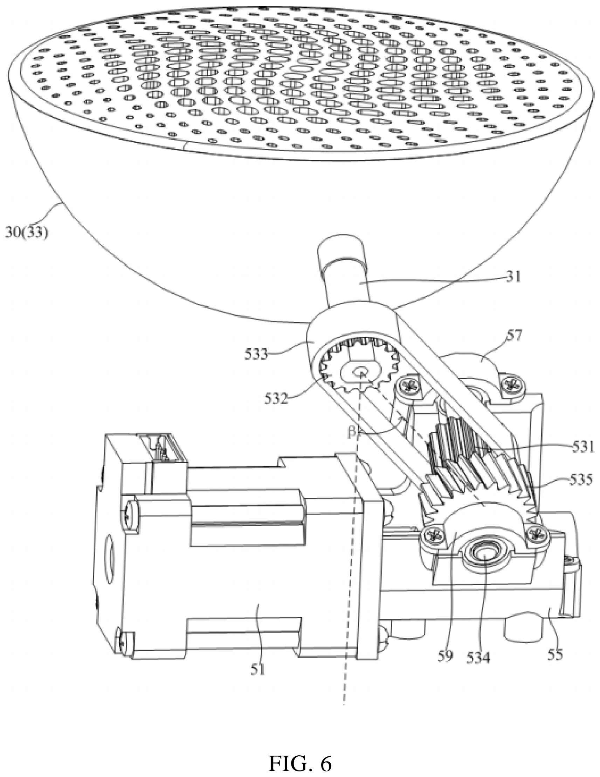

Please refer to FIG. 6, in an embodiment of the present disclosure, on a vertical projection plane, defining an angle formed between a connecting line between a projection of a center of the first transmission wheel 531 and a projection of a center of the second transmission wheel 532, and the up-down orientation as β, which satisfies a relationship: 30° ≤ β ≤ 50°.

In the present embodiment, by setting the angle β formed between a connecting line between a projection of a center of the first transmission wheel 531 and a projection of a center of the second transmission wheel 532 and the up-down orientation to range from 30° to 50°, it is possible to enable that on the vertical projection plane, the connecting line between a projection of a center of the first transmission wheel 531 and a projection of a center of the second transmission wheel 532 is inclined. In this case, the space occupied by the transmission assembly 53 in both the vertical and horizontal directions may be reduced and will not be too large, thereby improving the compactness between the transmission assembly 53 and the product body 30, and minimizing the overall size of the electronic product 100. Herein, the angle β formed between a connecting line between a projection of a center of the first transmission wheel 531 and a projection of a center of the second transmission wheel 532 and the up-down orientation can be 30°, 35°, 40°, 45°, or 50°, or any value within the above range. Of course, in other embodiments, the angle β formed between a connecting line between a projection of a center of the first transmission wheel 531 and a projection of a center of the second transmission wheel 532 and the up-down orientation can also be less than 30° or greater than 50°.

Please refer to FIG. 5, in an embodiment of the present disclosure, defining a distance between the center of the first transmission wheel 531 and the center of the second transmission wheel 532 as L, which satisfies a relationship: 40 mm ≤ L ≤ 50 mm.

**In** the present embodiment, by setting the distance L between the center of the first transmission wheel 531 and the center of the second transmission wheel 532 to range from 40 mm to 50 mm, on one hand, this may allow a certain spacing between the first transmission wheel 531 and the second transmission wheel 532 to facilitate the connection of the second transmission wheel 532 to the driving member 51; on the other hand, it prevents the distance between them from becoming too large, thereby avoiding an excessively large overall size of the transmission assembly 53. In other words, by setting the spacing between the first transmission wheel 531 and the second transmission wheel 532 in this manner, both the connection with the driving member 51 and the compactness of the transmission assembly 53 can be balanced. Herein, the distance L between the center of the first transmission wheel 531 and the center of the second transmission wheel 532 may be, for example, 40 mm, 41 mm, 42 mm, 43 mm, 44 mm, 45 mm, 46 mm, 47 mm, 48 mm, 49 mm, or 50 mm, or any value within this range. Of course, in other embodiments, the distance L may alternatively be less than 40 mm or greater than 50 mm.

In an embodiment of the present disclosure, the first transmission wheel 531 and the second transmission wheel 532 are made of plain medium-carbon steel.

In the present embodiment, by setting the material of the first transmission wheel 531 and the second wheel to plain medium-carbon steel, the first transmission wheel 531 and the second wheel may have good mechanical properties such as strength and wear resistance, thereby improving the transmission stability of the transmission assembly 53, enabling the product body 30 to rotate normally and effectively, reducing the noise generated during rotation, and also improving the service life of the transmission assembly 53. Of course, in other embodiments, the material of the first transmission wheel 531 and the second wheel can alternatively be other metals, or even plastic.

Please refer to FIG. 6, in an embodiment of the present disclosure, the first transmission wheel 531 and the second transmission wheel 532 are gears.

In the present embodiment, by setting the first transmission wheel 531 and the second transmission wheel 532 as gears, since the gears have convex teeth, this is beneficial to increase the driving force of the first transmission wheel 531 to the second transmission wheel 532, so that the transmission assembly 53 can effectively drive the product body 30 to rotate.

Please refer to FIG. 6, in an embodiment of the present disclosure, the transmission assembly 53 further includes a transmission belt 533, two ends of which are sleeved respectively on the first transmission wheel 531 and the second transmission wheel 532

In the present embodiment, after the first transmission wheel 531 is driven to rotate by the driving member 51, it can drive the transmission belt 533 to rotate. At the same time, the rotating transmission belt 533 drives the second transmission wheel 532. In this case, there is no direct meshing relationship between the first transmission wheel 531 and the second transmission wheel 532, so that the installation positions of the driving member 51 and the first transmission wheel 531 are not affected by the meshing relationship between the first transmission wheel 531 and the second transmission wheel 532. This facilitates the distance between the driving member 51 and the first transmission wheel 531 and that between the driving member 51 and the second transmission wheel 532 to be flexibly set according to actual needs. That is, once the distance between the driving member 51 and the first transmission wheel 531 and that between the driving member 51 and the second transmission wheel 532 are designed, a transmission belt 533 of corresponding length can be used, thereby helping improve the convenience of arranging the driving member 51 and the first transmission wheel 531. Furthermore, when both the first transmission wheel 531 and the second transmission wheel 532 are gears, in order to further improve transmission stability, the transmission belt 533 may be provided with meshing teeth that are engaged with the first transmission wheel 531 and the second transmission wheel 532.

Please refer to FIGS. 5 and 6, in an embodiment of the present disclosure, the driving mechanism 50 is disposed on an outer side of the mounting carrier 10, the product body 30 is convexly provided with a connecting shaft 31 which extends through the mounting carrier 10, and the second transmission wheel 532 is mounted on the connecting shaft 31 protruding from the mounting carrier 10.

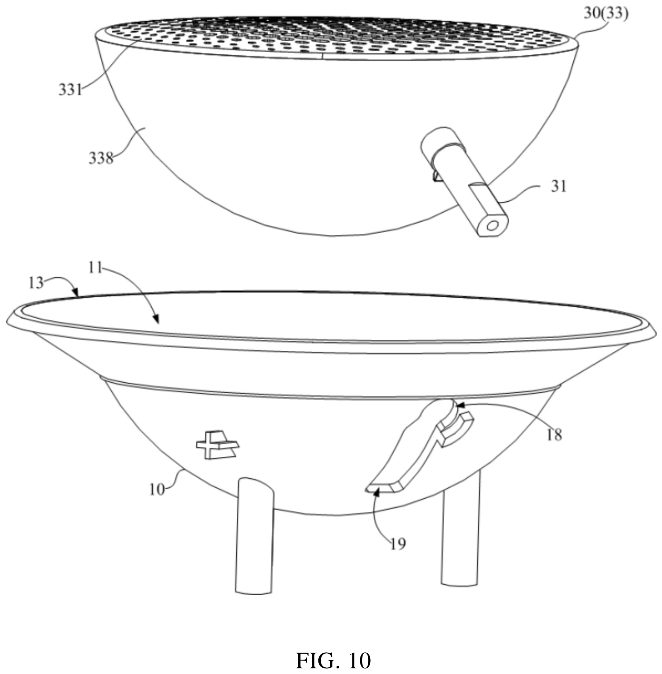

In the present embodiment, by disposing the driving mechanism 50 on an outer side of the mounting carrier 10, the mounting cavity 11 can be arranged to better adapted to the product body 30, which is beneficial to improving the overall compactness of the electronic product 100, so as to reduce the overall volume of the electronic product 100 and improve the convenience of subsequent installation thereof. Please refer to FIGS. 6, 9 and 10, the mounting carrier 10 may be provided with a clearance hole 18 through which the connecting shaft 31 extends. Further, in order to facilitate the connecting shaft 31 to extend through the clearance hole 18 when the product body 30 is mounted in the mounting cavity 11, the mounting carrier 10 may alternatively be provided with a mounting hole 19 in communication with the clearance hole 18. Thus, when the product body 30 is mounted in the mounting cavity 11, the connecting shaft 31 can extend through the mounting hole 19 first, and after the product body 30 is adjusted to the preset mounted posture, the connecting shaft 31 can correspondingly enter into the clearance hole 18 from the mounting hole 19. Herein, the mounting hole 19 may be arranged in a strip shape, so that the connecting shaft 31 can slide into the clearance hole 18 along the extending direction of the mounting hole 19 after extending through the mounting hole 19.

Please refer to FIGS. 5 to 7, in an embodiment of the present disclosure, the transmission assembly 53 further includes a mounting shaft 534, a worm gear 535, and a worm 536, an axis of the worm gear 535 coincides with the axis of the first transmission wheel 531, and the worm gear 535 and the first transmission wheel 531 are both mounted on the mounting shaft 534; the worm 536 is connected to the driving member 51 and rotatable under drive of the driving member 51, and the worm 536 is further meshed with the worm gear 535.

In the present embodiment, the transmission assembly 53 further includes a mounting shaft 534, a worm gear 535, and a worm 536, such that the driving member 51 and the first transmission wheel 531 are not required to be sequentially arranged in the axial direction of the first transmission wheel 531, and the axis of the driving member 51 and the axis of the first transmission wheel 531 may be disposed crosswise, which can further improve the arranging compactness between the driving member 51 and the transmission assembly 53, so as to reduce the overall volume of the electronic product 100 and improve the convenience of its subsequent placement. Of course, in other embodiment, when the transmission assembly 53 does not include the mounting shaft 534, the worm gear 535, and the worm 536, the first transmission wheel 531 may alternatively be directly provided on the driving member 51.

Please refer to FIG. 6, in an embodiment of the present disclosure, the electronic product 100 has an up-down orientation, and the mounting opening 13 is upwardly disposed; in the up-down orientation of the electronic product 100, the first transmission wheel 531 and the second transmission wheel 532 are provided in a staggered manner, and at least a portion of the driving member 51 is disposed below the second transmission wheel 532.

In the present embodiment, by arranging the first transmission wheel 531 and the second transmission wheel 532 in a staggered manner, at least a portion of the driving member 51 can be disposed below the second transmission wheel 532. In this case, the spaces on the opposite sides below the second transmission wheel 532 can be fully utilized, which helps further improve the spatial compactness among the driving member 51, the transmission assembly 53, and the product body 30, thereby further reducing the overall size of the electronic product 100. Of course, in other embodiments, the first transmission wheel 531 and the second transmission wheel 532 may alternatively be arranged side by side in the horizontal direction, or the first transmission wheel 531 may be positioned below the second transmission wheel 532.

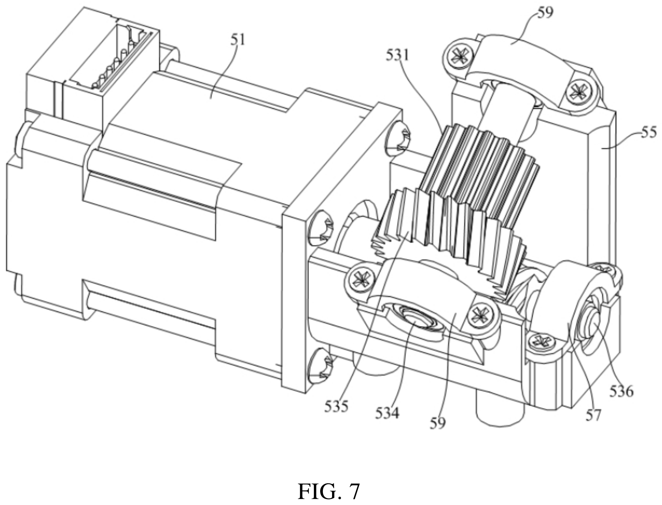

Please refer to FIGS. 6 and 7, in an embodiment of the present disclosure, the driving mechanism 50 further includes a mounting base 55, and the driving member 51, the worm 536, and the mounting shaft 534 are all mounted on the mounting base 55.

The mounting base 55 may be used to provide mounting positions for mounting the driving member 51, the worm 536, and the mounting shaft 534. The mounting base 55 may be a plate structure, or a combination structure of a plurality of plates, or even a frame structure consisting of a plurality of columns. The shape and structure of the mounting base 55 are not limited in the present disclosure, as long as the mounting base 55 can be used for mounting the driving member 51, the worm 536, and the mounting shaft 534.

In the present embodiment, by mounting the driving member 51, the worm 536, and the mounting shaft 534 all on the mounting base 55, the number of components in the electronic product 100 can be reduced, which helps simplify the structure of the electronic product 100 and improves the convenience of its manufacturing. Of course, the present disclosure is not limited thereto. In other embodiments, the driving member 51, the worm 536, and the mounting shaft 534 may each be mounted on separate carriers.

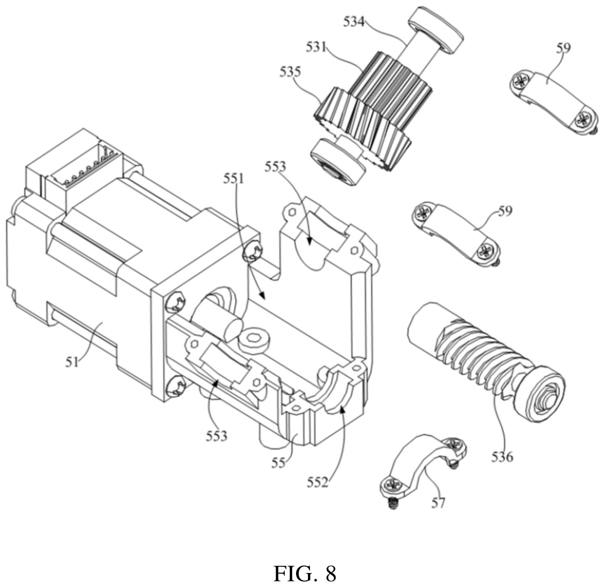

Please refer to FIGS. 7 and 8, in an embodiment of the present disclosure, the mounting base 55 is provided with an accommodation groove 551, and the driving member 51 is mounted on an outer side of the mounting base 55; the worm 536 is rotatably mounted on at least one of two opposite groove walls of the accommodation groove 551, and the mounting shaft 534 is rotatably mounted on at least one of another two opposite groove walls of the accommodation groove 551.

In the present embodiment, by positioning the driving member 51 on an outer side of the mounting base 55, the worm 536 and the mounting shaft 534 are crosswise mounted in the accommodation groove 551 of the mounting base 55, so that the driving member 51, the worm 536, and the worm gear 535 can all have good mounting positions, thereby facilitating their ease of mounting on mounting base 55. At the same time, the space on the inner side and the outer side of the mounting base 55 can also be fully utilized at this time, which is beneficial to further improving the arranging compactness between the driving member 51 and the transmission assembly 53. In addition, it should be noted that when the first transmission wheel 531 and the worm gear 535 are both rotatably mounted on the mounting shaft 534, the mounting shaft 534 may alternatively be fixedly disposed on the mounting base 55.

Please refer to FIGS. 7 and 8, in an embodiment of the present disclosure, a groove wall of the accommodation groove 551 is provided with a first mounting groove 552 at an end distant from a groove bottom of the accommodation groove 551, and at least one end of two opposite ends of the worm 536 is mounted within the first mounting groove 552. The driving mechanism 50 further includes a first clamping member 57, which is connected to the mounting base 55 and cooperates with the mounting base 55 to constrain the worm 536 accommodated within the first mounting groove 552.

At least one of the opposite ends of the worm 536 is mounted in the first mounting groove 552, that is, the groove wall of the accommodation groove 551 may be provided with two first mounting grooves 552, such that opposite ends of the worm 536 are mounted to the two first mounting grooves 552, respectively. Of course, since one end of the worm 536 is connected to the driving member 51, the groove wall of the accommodation groove 551 may alternatively be provided with only one first mounting groove 552, so that the end of the worm 536 distant from the driving member 51 is mounted in the accommodation groove 551. At this time, the end of the driving member 51 connected to the worm 536 and/or the end of the worm 536 connected to the driving member 51 may extend through the mounting base 55. The first clamping member 57 may be used to cooperate with the mounting base 55 to constrain the worm 536 accommodated in the first mounting groove 552. Therefore, the first mounting groove 552 may be provided in a semicircular shape, and together with the first clamping member 57, enclose an integral circular hole for fitting and accommodating the worm 536.

In the embodiment of the present disclosure, by providing the first mounting groove 552 on the end of the groove wall of the accommodation groove 551 distant from the groove bottom of the accommodation groove 551, and providing the first clamping member 57 in cooperation therewith: at this time, on one hand, the first mounting groove 552 can be processed and formed more conveniently, and on the other hand, the worm 536 can be installed in the first mounting groove 552 first and then the first clamping member 57 is closed into place, which allows the worm 536 to be installed and constrained. At this time, the worm 536 can be smoothly installed in the first mounting groove 552, which is beneficial to improving the convenience of installing the worm 536. Further, in order to improve the smoothness of the rotation of the worm 536, a bearing may be sleeved on the end of the worm 536. Further, in order to improve the convenience of maintenance and replacement of the worm 536, the first clamping member 57 may be detachably connected to the mounting base 55. Specifically, the first clamping member 57 may be connected by screws so as to improve the connection stability between the first clamping member 57 and the mounting base 55 while simplifying the disassembly and assembly of the first connection member. Of course, the first clamping member 57 may alternatively be connected to the mounting base 55 by a clamping connection or a magnetic connection. Alternatively, in some embodiments, the first clamping member 57 may be fixedly provided.

Please refer to FIGS. 7 and 8, in an embodiment of the present disclosure, the groove wall of the accommodation groove 551 is further provided with a second mounting groove 553 at the end distant from the groove bottom of the accommodation groove 551, and at least one end of the two opposite ends of the mounting shaft 534 is mounted within the second mounting groove 553; the driving mechanism 50 further includes a second clamping member 59, which is connected to the mounting base 55 and cooperates with the mounting base 55 to constrain the mounting shaft 534 accommodated within the second mounting groove 553.

At least one end of the two opposite ends of the mounting shaft 534 is mounted within the second mounting groove 553, that is, the groove wall of the accommodation groove 551 may be provided with two second mounting grooves 553, such that opposite ends of the mounting shaft 534 are mounted to the two second mounting grooves 553, respectively. Of course, the groove wall of the accommodation groove 551 may alternatively be provided with only one second mounting groove 553, and at this time, one end of the mounting shaft 534 is mounted in the accommodation groove 551. The second clamping member 59 can be used to cooperate with the mounting base 55 to constrain the mounting shaft 534 accommodated in the second mounting groove 553. Therefore, the second mounting groove 553 may be provided in a semicircular shape, and together with the second clamping member 59, may enclose an integral circular hole for accommodating the mounting shaft 534.

In the present embodiment, by providing the second mounting groove 553 on the groove wall of the accommodation groove 551 at the end distant from the groove bottom of the accommodation groove 551, and providing the second clamping member 59 in cooperation therewith, at this time, on one hand, the second mounting groove 553 can be processed and formed more conveniently, and on the other hand, the mounting shaft 534 can be installed in the second mounting groove 553 first and then the second clamping member 59 is covered, which allows the mounting shaft 534 to be installed and constrained. At this time, the mounting shaft 534 can be smoothly installed in the second mounting groove 553, which is beneficial to improving the convenience of installing the mounting shaft 534. Further, in order to improve the smoothness of the rotation of the mounting shaft 534, a bearing may be sleeved on the end of the mounting shaft 534. Further, in order to improve the convenience of maintenance and replacement of the mounting shaft 534, the second clamping member 59 may be detachably connected to the mounting base 55. Specifically, the second clamping member 59 may be connected by screws so as to improve the connection stability between the second clamping member 59 and the mounting base 55 while simplifying the disassembly and assembly of the first connection member. Of course, the second clamping member 59 may alternatively be connected to the mounting base 55 by a clamping connection or a magnetic connection. Alternatively, in some embodiments, the second clamping member 59 may be fixedly provided.

Please refer to FIG. 5, in an embodiment of the present disclosure, the electronic product 100 further includes a connecting bracket 70, which may be disposed on an outer side of the mounting carrier 10, and the mounting carrier 10 and the mounting base 55 may be connected to the connecting bracket. Meanwhile, the connecting shaft 31 extending through the mounting carrier 10 may alternatively be rotatably provided on the connecting bracket 70. In this way, the connecting shaft 31, the mounting carrier 10 and the mounting base 55 can be mounted by one connecting bracket 70, and thus it is convenient to integrally mount this part to a carrier, such as the outer casing 90 of the electronic product 100. At this time, the outer casing 90 needs to be provided with an exposed opening 91 to accommodate and expose one end of the mounting carrier 10 formed with the mounting opening 13 and the loudspeaker assembly 33.

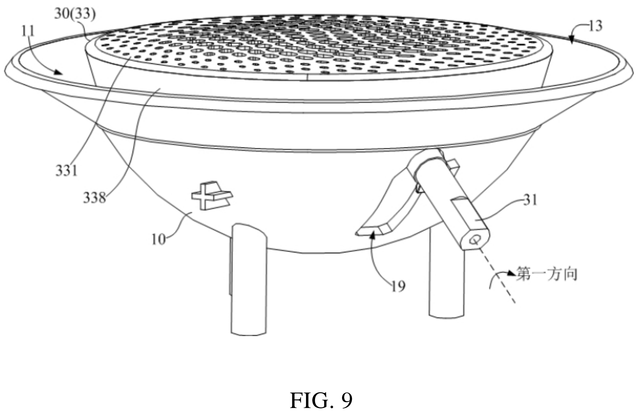

Please refer to FIG. 9, in an embodiment of the present disclosure, the product body 30 is a loudspeaker assembly 33.

In the present embodiment, by setting the product body 30 as the loudspeaker assembly 33, the product body 30 may formed as a speaker. At this time, the electronic product 100 is a home speaker for indoor use, and can also be a vehicle-mounted speaker for in-vehicle use. Regardless of the type of the speaker, it has a high usage rate, thereby enabling the electronic product 100 to have wide application and bring higher commercial value when the product body 30 is configured as the loudspeaker assembly 33.

Please refer to FIG. 9, in an embodiment of the present disclosure, the loudspeaker assembly 33 has a sound-emitting surface 331, and the loudspeaker assembly 33 is rotatable such that the sound-emitting surface 331 extends out of the mounting opening 13; the sound-emitting surface 331 is provided with sound outlets 332, and a ratio of an area of the sound outlets 332 to an area of the sound-emitting surface 331 is greater than or equal to 0.5.

The sound-emitting surface 331 refers to a side of the loudspeaker assembly 33 on which the sound outlets 332 are formed so that sound can be produced. The ratio of the area of the sound outlets 332 to the area of the sound-emitting surface 331, when the number of the sound outlets 332 is one, refers to the ratio of the area of the single sound outlet 332 to the entire area of the sound-emitting surface 331, and when the number of the sound outlets 332 is plural, refers to a ratio of a total area of the plurality of sound outlets 332 to the entire area of the sound-emitting surface 331, and at this time, the areas of the plurality of sound outlets 332 may be set to be identical, and may alternatively be set to be only partially identical, or may be set to be all distinct. The shape of each sound outlet 332 may be set to be the same, or partially the same, or all distinct. In addition, the sound outlets 332 may have any shape such as a circular shape, an oval shape, or a square shape.

In the present embodiment, by setting the ratio of an area of the sound outlets 332 to an area of the sound-emitting surface 331 to be greater than or equal to 0.5, on one hand, the area of the sound outlets 332 is not too small, thereby facilitating the passage of the sound emitted by the loudspeaker assembly 33, so as to improve the sounding effect of the loudspeaker assembly 33. In particular, the loudspeaker assembly 33 can facilitate the effective passage of sound for high-pitched sounds with strong directivity. On the other hand, the area of the sound outlets 332 is not too large, the portion in which the sound outlets 332 are formed can better protect the loudspeaker unit 336 inside the loudspeaker assembly 33, so as to further improve the effect of protecting the electronic product 100. Herein, the ratio of the area of the sound outlets 332 to the area of the sound-emitting surface 331 may be 0.5, 0.6, 0.7, 0.8, or 0.9, or may be any value in the above range. Of course, in other embodiments, the ratio of the area of the sound outlets 332 to the area of the sound-emitting surface 331 may be other values smaller than 0.5.

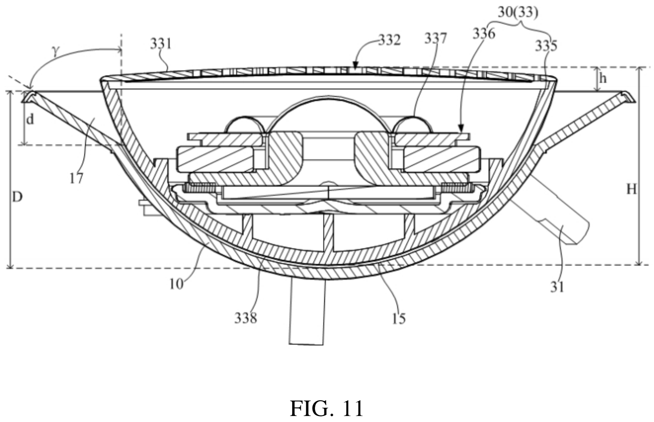

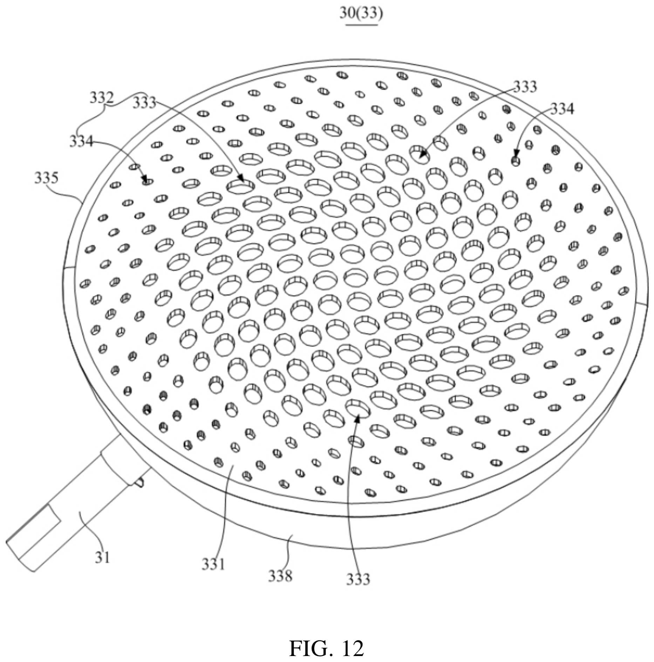

Please refer to FIGS. 11 and 12, in an embodiment of the present disclosure, the sound outlets 332 include a plurality of first hole bodies 333 and a plurality of second hole bodies 334, the hole area of one first hole body 333 is greater than that of one second hole body 334, and the plurality of second hole bodies 334 surround an outer side of the plurality of first hole bodies 333.

In the present embodiment, the plurality of second hole bodies 334 surround an outer side of the plurality of first hole bodies 333, that is, the hole bodies having a relatively large hole area are disposed at the center of the sound-emitting surface 331, and the hole bodies having a relatively small hole area are disposed at the periphery of the sound-emitting surface 331. The main sounding portion of the loudspeaker unit 336 in the loudspeaker assembly 33 is located in the middle, corresponding to the plurality of the first hole bodies 333 in the middle. In this manner, the plurality of first hole bodies 333 having a relatively large hole area can provide better clearance for the sound emitted by the loudspeaker unit 336 in the loudspeaker assembly 33, so as to further improve the sounding effect of the loudspeaker assembly 33.

Please refer to FIG. 11, in an embodiment of the present disclosure, the loudspeaker assembly 33 includes a loudspeaker housing 335 and a loudspeaker unit 336 mounted within the loudspeaker housing 335, and the loudspeaker unit 336 includes a diaphragm 337; a wall surface of the loudspeaker housing 335 opposite to the diaphragm 337 constitutes the sound-emitting surface 331, and in a projection plane perpendicular to an axis of the loudspeaker unit 336, a projection of a region of the sound-emitting surface 331 provided with the plurality of first hole bodies 333 covers a projection of the diaphragm 337.

The projection of the region of the sound-emitting surface 331 provided with the plurality of first hole bodies 333 covers the projection of the diaphragm 337, meaning that the projected area of the region of the sound-emitting surface 331 provided with the plurality of first hole bodies 333 is equal to or larger than that of the diaphragm 337.

In the present embodiment, by covering the region of the sound-emitting surface 331 provided with the plurality of first hole bodies 333 with the diaphragm 337 of the loudspeaker unit 336, since the loudspeaker unit 336 vibrates through the diaphragm 337, it is possible to facilitate the sound generated when the diaphragm 337 vibrates to pass through the region where the plurality of first hole bodies 333 are disposed corresponding to the diaphragm 337 as much as possible, thereby further improving the sound generation effect of the loudspeaker assembly 33. Of course, in other embodiments, it can also be said that the projected area of the region of the sound-emitting surface 331 provided with the plurality of first hole bodies 333 is set to be smaller than that of the diaphragm 337.

Please refer to FIG. 9, in an embodiment of the present disclosure, the loudspeaker assembly 33 has a sound-emitting surface 331, and the loudspeaker assembly 33 is rotatable such that the sound-emitting surface 331 extends out of the mounting opening 13; it is defined that the loudspeaker assembly 33 has an initial state when not driven to rotate, and in the initial state, the sound-emitting surface 331 is exposed from the mounting opening 13.

The initial state is when the loudspeaker assembly 33 is not moving. The exposure of the sound-emitting surface 331 from the mounting opening 13 means that the sound-emitting surface 331 can be seen from the outside through the mounting opening 13. This includes the state in which the sound-emitting surface 331 is horizontally disposed, as well as the state in which the sound-emitting surface 331 is inclined at an angle to the horizontal plane.

In the present embodiment, by setting the sound-emitting surface 331 of the loudspeaker assembly 33 in the initial state to be exposed through the mounting opening 13, on one hand, the loudspeaker assembly 33 can give the user a more intuitive feeling, thereby facilitating the user to quickly understand it and further improving the use experience. On the other hand, when the loudspeaker assembly 33 is driven to rotate, it can also rotate more quickly to the state of extending from the mounting opening 13, which is beneficial to improving the use experience. In addition, since the profile of the loudspeaker assembly 33 is generally larger at the sound-emitting end and smaller at an end distant from the sound-emitting end, arranging the sound-emitting surface 331 to be exposed from the mounting opening 13 also enables the sound-emitting end of the loudspeaker assembly 33 to be arranged close to the mounting opening 13, and further enhances the compactness of the distribution between the loudspeaker assembly 33 and the cavity wall of the mounting cavity 11 while realizing the rotation of the loudspeaker assembly 33. In addition, when the loudspeaker assembly 33 is not driven to rotate, if the loudspeaker assembly 33 is required to work, since the sound-emitting surface 331 is exposed from the mounting opening 13, the normal and effective sounding operation of the loudspeaker assembly 33 can also be conveniently realized. Of course, it should be noted that the present disclosure is not limited thereto. In other embodiments, in the initial state, the sound-emitting surface 331 of the loudspeaker assembly 33 may be disposed toward the cavity bottom of the mounting cavity 11.

Please refer to FIGS. 9 and 11, in an embodiment of the present disclosure, in the initial state, an end of the loudspeaker assembly 33 having the sound-emitting surface 331 protrudes from the mounting opening 13.

In the present embodiment, by setting the end of the loudspeaker assembly 33 having the sound-emitting surface 331 to protrude from the mounting opening 13 in the initial state, it is possible to enhance the visibility of the sound-emitting surface 331 of the loudspeaker assembly 33. At this time, when the loudspeaker assembly 33 is rotated to protrude from the mounting opening 13 to be in an upright state, it is also possible to reduce the shielding of the loudspeaker assembly 33 caused by the cavity wall of the mounting cavity 11, so that the sound emitted by the loudspeaker assembly 33 is optimally radiated to a side towards which the sound-emitting surface 331 faces. Particularly, when the loudspeaker assembly 33 can also work in the initial state, one end of the loudspeaker assembly 33 having the sound-emitting surface 331 protrudes, which is more advantageous for the sound to be radiated to the outside. Of course, it should be noted that the present disclosure is not limited thereto. In other embodiments, one end of the loudspeaker assembly 33 having the sound-emitting surface 331 may be flush with the mounting opening 13, or completely inside the mounting cavity 11.

Please refer to FIG. 11, in an embodiment of the present disclosure, it is defined that the electronic product 100 has an up-down orientation, and the mounting opening 13 is upwardly disposed; in the up-down orientation of the electronic product 100, defining a height of the loudspeaker assembly 33 as H, and a height by which the loudspeaker assembly 33 protrudes from the mounting opening 13 as h, which satisfies a relationship: 0 < h/H ≤ 0.5.

In the present embodiment, when the ratio h/H between the height "h" of the loudspeaker assembly 33 projecting from the mounting opening 13 and the height "H" of the loudspeaker assembly 33 is greater than 0.5, although the loudspeaker assembly 33 can be well exposed, the mounting cavity 11 at this time can only store and accommodate a small portion of the loudspeaker assembly 33. Therefore, to balance both the storage and protection effect of the loudspeaker assembly 33 within the mounting cavity 11 and its subsequent sound radiation performance, the value of h/H is set to be h/H ≦ 0.5. Wherein, the value of h/H may be 0.1, 0.2, 0.3, 0.4, or 0.5, and of course, it may be any value in the above range. In addition, it should be noted that when the sound-emitting surface 331 of the loudspeaker assembly 33 is a plane, the height of the plane above the mounting opening 13 is taken as "h"; when the sound-emitting surface 331 of the loudspeaker assembly 33 is a curved surface, the height of the highest point of the curved surface above the mounting opening 13 may be taken as "h".

Please refer to FIGS. 9 to 11, in an embodiment of the present disclosure, the loudspeaker assembly 33 further has a back surface 338, which is connected to the sound-emitting surface 331, is configured as a convex spherical surface, and has a spherical center, and a rotation axis of the loudspeaker assembly 33 extends through the spherical center; a cavity wall of the mounting cavity 11 includes a spherical wall surface 15, and a spherical center of the spherical wall surface 15 coincides with the spherical center of the back surface 338.

In the present embodiment, by setting the back surface 338 of the loudspeaker assembly 33 to the spherical surface while the cavity wall of the mounting cavity 11 is provided with an adapted spherical wall surface 15, it is possible to improve the compactness between the loudspeaker assembly 33 and the mounting carrier 10, so as to reduce the overall volume of the electronic product 100; wherein, the back surface 338 of the loudspeaker assembly 33 may abut against the spherical wall surface 15 of the mounting cavity 11, and of course, a space may be formed between the back surface 338 and the spherical wall surface 15, so as to reduce wear as the loudspeaker assembly 33 is rotated. In addition, the outer surface of the mounting carrier 10 corresponding to the spherical wall surface 15 may alternatively be configured as an adaptive spherical surface, and thus the uniformity of the cavity wall of the mounting cavity 11 can be ensured to reduce raw materials, thereby reducing the manufacturing cost while reducing the overall volume of the mounting carrier 10. Additionally, the drive mechanism 50 may be disposed on an outer side of the mount carrier 10, and the loudspeaker assembly 33 located within the mounting cavity 11 may be convexly provided with the connecting shaft 31 which extends through the mounting carrier 10 to connect to the driving mechanism 50.

Please refer to FIGS. 9 and 11, in an embodiment of the present disclosure, the cavity wall of the mounting cavity 11 further comprises an inclined wall surface 17, which is connected to the spherical wall surface 15, and an end of which distant from the spherical wall surface 15 encloses the mounting opening 13; the inclined wall surface 17 flares outwardly in a direction from a cavity bottom of the mounting cavity 11 toward the mounting opening 13.

In the present embodiment, since the inclined wall surface 17 in the flared shape is provided at the mounting opening 13 of the mounting cavity 11, when the loudspeaker assembly 33 is rotated such that the sound-emitting surface 331 extends out of the mounting opening 13 to be in the upright state, the inclined wall surface 17 can provide better clearance for the sound radiated by the sound-emitting surface 331, so as to further improve the sounding effect of the loudspeaker assembly 33. In particular, for a high-pitched loudspeaker with strong directivity, the provision of the inclined wall surface 17 is more conducive to the normal and effective propagation of sound.

Please refer to FIG. 11, in an embodiment of the present disclosure, it is defined that the electronic product 100 has an up-down orientation, and the mounting opening 13 is upwardly disposed. On a vertical section, an angle formed between the inclined wall surface 17 and the up-down orientation is defined as y, which satisfies a relationship: 40° ≤ γ ≤ 70°.

In the present embodiment, by setting the angle γ formed between the inclined wall surface 17 and the up-down orientation to range from 40° to 70°, on one hand, this prevents γ from being too small, which would impair the sound clearance effect; on the other hand, it prevents γ from being too large, which would otherwise increase the overall volume of the mounting carrier 10 and enlarge the gap between the inclined wall surface 17 and the loudspeaker assembly 33, increasing the risk of foreign matter ingress. Therefore, by setting the angle γ formed between the inclined wall surface 17 and the up-down orientation to range from 40 to 70, it is possible to balance the sound clearance effect, the size of the overall volume of the mounting carrier 10, and the size of the gap between the mounting carrier 10 and the loudspeaker assembly 33. Wherein, the angle γ formed between the inclined wall surface 17 and the up-down orientation may be 40°, 45°, 50°, 55°, 60°, 65° or 75°, or may be any value in the above range. Of course, in other embodiments, the angle γ formed between the inclined wall surface 17 and the up-down orientation is set to be less than 40° or more than 70°.

Please refer to FIG. 11, in an embodiment of the present disclosure, defining a depth of the mounting cavity 11 as D, and a projection length of the inclined wall surface 17 in the up-down orientation as d, which satisfies a relationship: 0.1 ≤ d/D ≤ 0.4.

In the present embodiment, by setting the ratio of the projection length d of the inclined wall surface 17 in the up-down orientation to the depth D of the mounting cavity 11 to range from 0.1 to 0.4, on one hand, this ensures that the inclined wall surface 17 is not too short to impair the sound clearance effect; on the other hand, it is possible that the inclined wall surface 17 will not too large to increase the overall volume of the mounting carrier 10 while causing the gap between the inclined wall surface 17 and the loudspeaker assembly 33 too large to increase the possibility of foreign matter falling. Therefore, by setting the ratio of the projection length d of the inclined wall surface 17 in the up-down orientation to the depth D of the mounting cavity 11 to range from 0.1 to 0.4, it is also possible to balance the sound clearance effect, the size of the overall volume of the mounting carrier 10, and the size of the gap between the mounting carrier 10 and the loudspeaker assembly 33. Wherein, the ratio of the projection length d of the inclined wall surface 17 in the up-down orientation to the depth D of the mounting cavity 11 may be 0.1, 0.15, 0.2, 0.25, 0.35 or 0.4, or may be any value in the above range. Of course, in other embodiments, the ratio of the projection length d of the inclined wall surface 17 in the up-down orientation to the depth D of the mounting cavity 11 is set to be less than 0.1 or more than 0.4.

Please refer to FIG. 2, in an embodiment of the present disclosure, it is defined that the electronic product 100 has an up-down orientation, and the mounting opening 13 is upwardly disposed; when the loudspeaker assembly is rotated to a preset rotation stroke, an angle formed between a center line of the loudspeaker assembly extending through the sound-emitting surface and a horizontal direction is Z, which satisfies a relationship: 0° ≤ Z ≤ 20°.

In the present embodiment, the preset rotation stroke is the state after the loudspeaker assembly 33 is rotated by a preset angle. That is, the loudspeaker assembly 33 extends from the mounting opening 13 after being rotated, and the sound-emitting surface 331 is in the upright state. At this time, by setting the angle Z formed between the center line extending through the sound-emitting surface 331 of the loudspeaker assembly 33 and the horizontal direction to range from 0° to 20°, it is possible to make the sound-emitting surface 331 of the loudspeaker assembly 33 upright or slightly inclined. At this time, the sound-emitting surface 331 of the loudspeaker assembly 33 can achieve better sound production toward the user, which can give the user better visual and auditory effects, thereby being beneficial to further improving the use experience of the user on the electronic product 100. Particularly, in cooperation with the arrangement that the cavity wall of the mounting cavity 11 is the inclined wall surface 17 in the flared shape, the sound emitted by the loudspeaker assembly 33 can be more smoothly propagated toward the user. Wherein, the angle Z formed between the center line extending through the sound-emitting surface 331 of the loudspeaker assembly 33 and the horizontal direction may be 0°, 5°, 10°, 15°, or 20°, or may be any value in the above range. Of course, in other embodiments, the angle Z formed between the center line extending through the sound-emitting surface 331 of the loudspeaker assembly 33 and the horizontal direction may be set to be greater than 20°.

The position of the product body 30 after being rotated is defined above, and when the initial state of the product body 30 is defined, that is, when the working surface of the product body 30 is horizontally arranged, the preset rotating stroke of the product body 30 may be directly defined, such that the product body 30 after rotation can have an effect similar to the above case where the angle Z formed between the center line extending through the sound-emitting surface 331 of the loudspeaker assembly 33 and the horizontal direction is set to range from 0 to 20. Therefore, in an embodiment of the present disclosure, please refer to FIG. 9, the product body 30, when rotating, is rotatable along a first direction or a second direction opposite to the first direction, and defining a preset rotation stroke of the product body 30 as X; when the product body 30 is rotated along the first direction, satisfying a relationship: 250° ≤ X ≤ 270°, and when the product body 30 is rotated along the second direction, satisfying a relationship: 90° ≤ X ≤ 110°.

In the present embodiment, by rotating the product body 30 by 250° to 270° in the first direction, the larger rotation travel at this point may facilitate enhancing the sense of movement of the product body 30. By rotating the product body 30 along the second direction opposite to the first direction by 90° to 110°, the smaller rotation travel at this point may facilitate improving the working efficiency of the product body 30. Wherein, when the product body 30 is rotated along the first direction, it can be rotated by 250°, 255°, 260°, 265°, or 270°, or any value within the above range. When the product body 30 is rotated in the second direction opposite to the first direction, it can be rotated by 90°, 95°, 100°, 105°, or 110°, or any value within the above range.

In an embodiment of the present disclosure, noise generated by the product body 30 during rotation is less than or equal to 30 dB.

In the present embodiment, by setting the noise generated by the product body 30 during rotation to be less than or equal to 30 dB, it is possible that the product body 30 generates less noise when rotating, which is beneficial to further improving the use experience of the electronic product 100. Herein, it is possible to improve the assembly accuracy of the driving mechanism 50 so as to reduce the noise generated during the movement, and it is also possible to reduce the noise of the product body 30 by using a sound-absorbing member when the driving mechanism 50 is installed.

In an embodiment of the present disclosure, defining time for the product body 30 to rotate to the preset rotation stroke as T, which satisfies a relationship: 2s ≤ T ≤ 4s.

In the present embodiment, by setting the time T during which the product body 30 is rotated to protrude from the mounting opening 13 and to be in the upright state to 2s to 4s, on one hand, this ensures that the rotation time of the product body 30 is not too short to impair its rotation stability and the dynamic ritualistic experience given to the user; on the other hand, the rotating time of the product body 30 will not be too long to affect the working efficiency of the product body 30. Therefore, by setting the time T during which the product body 30 is rotated to protrude from the mounting opening 13 and to be in the upright state to 2s to 4s, it is possible to better balance the rotational stability of the product body 30, the dynamic ritualistic experience given to the user, and the working efficiency. Of course, in other embodiments, the rotation time of the product body 30 can also be set to be less than 2s or more than 4s.

In an embodiment of the present disclosure, the electronic product 100 further comprises a position recognizer and a rotation controller, and the position recognizer is configured to recognize a target position where a user is located; the rotation controller is configured to control a rotation angle of the product body 30 according to recognition information from the position recognizer, so that the product body 30 faces towards the target position.

The position recognizer may be used to identify the target position where the user is located, and may transmit the target position information of the user to the rotation controller. Then, according to the target position information transmitted to the rotation controller, the rotation controller can control the driving mechanism 50 to drive the product body 30 to rotate by a corresponding angle, such that the working surface of the product body 30 can be optimally directed towards the target position where the user is located. Wherein, the position recognizer may be a vision module, and recognizes the position where the user is located by capturing an image of the user. Of course, the position recognizer may alternatively be a microphone module, and recognizes the position where the user is located by acquiring the voice of the user. In addition, the position recognizer and the rotation controller may be provided on the electronic product 100, and of course may alternatively be provided on other carriers. For example, when the product body 30 is a vehicle-mounted product (a vehicle-mounted speaker or a vehicle-mounted robot), the position recognizer and the rotation controller may be provided directly on the vehicle body.

In the present embodiment, the position recognizer and rotation controller can be set to automatically recognize the position where the user is located, and then control the product body 30 to automatically rotate to face towards the user for working. In this way, it is possible to further improve the intelligence level of the electronic product 100, which is beneficial to further improving the use experience of the electronic product 100. Of course, it should be noted that when the product body 30 is set to perform a setpoint stop only when it is rotated to the preset rotation stroke, it is not necessary to provide the position recognizer and rotation controller. When the product body 30 is set to stop at will during rotation, the position recognizer and the rotation controller can be provided in conjunction to improve intelligence. extending throughextending through

The foregoing are merely preferred embodiments of the present disclosure and are not to be construed as limiting the scope of the present disclosure. Any equivalent structural transformation made by using the specification and drawings of the present disclosure under the inventive concept of the present disclosure, or direct/indirect application in other related technical fields are included in the patent protection scope of the present disclosure.

## Claims

1. An electronic product, **characterized by** comprising:
a mounting carrier, provided with a mounting cavity and a mounting opening in communication with the mounting cavity; and
a product body disposed within the mounting cavity and configured to rotate such that at least a portion thereof extends out of the mounting opening.

2. The electronic product according to claim 1, **characterized in that** the electronic product further comprises a driving mechanism for driving the product body to rotate.

3. The electronic product according to claim 2, **characterized in that** the driving mechanism comprises a driving member and a transmission assembly, and the transmission assembly comprises a first transmission wheel and a second transmission wheel;
the first transmission wheel is connected to the driving member and rotatable under drive of the driving member;
the second transmission wheel is connected to the product body, an axis of the second transmission wheel and that of the first transmission wheel are arranged side by side, and the second transmission wheel is rotatable under actuation of the first transmission wheel.

4. The electronic product according to claim 3, **characterized in that** it is defined that the electronic product has an up-down orientation, the mounting opening is upwardly disposed, and the axis of the second transmission wheel is inclined downwardly.

5. The electronic product according to claim 4, **characterized in that** the product body has a spherical center, and the axis of the second transmission wheel extends through the spherical center of the product body; on a vertical section extending through the axis of the second transmission wheel, defining an angle formed between the axis of the second transmission wheel and the up-down orientation as α, which satisfies a relationship: 45° ≤ α ≤ 70°;
and/or, on a vertical projection plane, defining an angle formed between a connecting line between a projection of a center of the first transmission wheel and a projection of a center of the second transmission wheel, and the up-down orientation as β, which satisfies a relationship: 30° ≤ β ≤ 50°;
and/or, defining a distance between the center of the first transmission wheel and the center of the second transmission wheel as L, which satisfies a relationship: 40 mm ≤ L ≤ 50 mm.

6. The electronic product according to claim 3, **characterized in that** the first transmission wheel and the second transmission wheel are made of plain medium-carbon steel;
and/or, the first transmission wheel and the second transmission wheel are gears;
and/or, the transmission assembly further comprises a transmission belt, two ends of which are sleeved respectively on the first transmission wheel and the second transmission wheel;
and/or, the driving mechanism is disposed on an outer side of the mounting carrier, the product body is convexly provided with a connecting shaft which extends through the mounting carrier, and the second transmission wheel is mounted on the connecting shaft protruding from the mounting carrier.

7. The electronic product according to claim 3, **characterized in that** the transmission assembly further comprises a mounting shaft, a worm gear, and a worm, an axis of the worm gear coincides with the axis of the first transmission wheel, and the worm gear and the first transmission wheel are both mounted on the first mounting shaft;
the worm is connected to the driving member and rotatable under drive of the driving member, and the worm is further meshed with the worm gear.

8. The electronic product according to claim 7, **characterized in that** it is defined that the electronic product has an up-down orientation, and the mounting opening is upwardly disposed;
in the up-down orientation of the electronic product, the first transmission wheel and the second transmission wheel are staggered, and at least a portion of the driving member is disposed below the second transmission wheel.

9. The electronic product according to claim 7, **characterized in that** the driving mechanism further comprises a mounting base, and the driving member, the worm, and the mounting shaft are all mounted on the mounting base.

10. The electronic product according to claim 9, **characterized in that** the mounting base is provided with an accommodation groove, and the driving member is mounted on an outer side of the mounting base;
the worm is rotatably mounted on at least one of two opposite groove walls of the accommodation groove, and the mounting shaft is rotatably mounted on at least one of another two opposite groove walls of the accommodation groove.

11. The electronic product according to claim 10, **characterized in that** a groove wall of the accommodation groove is provided with a first mounting groove at an end distant from a groove bottom of the accommodation groove, and at least one end of two opposite ends of the worm is mounted within the first mounting groove; the driving mechanism further comprises a first clamping member, which is connected to the mounting base and cooperates with the mounting base to constrain the worm accommodated within the first mounting groove;
and/or, the groove wall of the accommodation groove is further provided with a second mounting groove at the end distant from the groove bottom of the accommodation groove, and at least one end of the two opposite ends of the mounting shaft is mounted within the second mounting groove; the driving mechanism further comprises a second clamping member, which is connected to the mounting base and cooperates with the mounting base to constrain the mounting shaft accommodated within the second mounting groove.

12. The electronic product according to any one of claims 1 to 11, **characterized in that** the product body is a loudspeaker assembly.

13. The electronic product according to claim 12, **characterized in that** the loudspeaker assembly has a sound-emitting surface, and the loudspeaker assembly is rotatable such that the sound-emitting surface extends out of the mounting opening;
the sound-emitting surface is provided with sound outlets, and a ratio of an area of the sound outlets to an area of the sound-emitting surface is greater than or equal to 0.5.

14. The electronic product according to claim 13, **characterized in that** the sound outlets comprise a plurality of first hole bodies and a plurality of second hole bodies, a hole area of the first hole bodies is greater than that of the second hole bodies, and the plurality of second hole bodies surround an outer side of the plurality of first hole bodies.

15. The electronic product according to claim 14, **characterized in that** the loudspeaker assembly comprises a loudspeaker housing and a loudspeaker unit mounted within the loudspeaker housing, and the loudspeaker unit comprises a diaphragm;
a wall surface of the loudspeaker housing opposite to the diaphragm constitutes the sound-emitting surface, and in a projection plane perpendicular to an axis of the loudspeaker unit, a projection of a region of the sound-emitting surface provided with the plurality of first hole bodies covers a projection of the diaphragm.

16. The electronic product according to claim 12, **characterized in that** the loudspeaker assembly has a sound-emitting surface, and the loudspeaker assembly is rotatable such that the sound-emitting surface extends out of the mounting opening;
it is defined that the loudspeaker assembly has an initial state when not driven to rotate, and in the initial state, the sound-emitting surface is exposed from the mounting opening.

17. The electronic product according to claim 16, **characterized in that** in the initial state, an end of the loudspeaker assembly having the sound-emitting surface protrudes from the mounting opening.

18. The electronic product according to claim 17, **characterized in that** it is defined that the electronic product has an up-down orientation, and the mounting opening is upwardly disposed;
in the up-down orientation of the electronic product, defining a height of the loudspeaker assembly as H, and a height by which the loudspeaker assembly protrudes from the mounting opening as h, which satisfies a relationship: 0 < h/H ≤ 0.5.

19. The electronic product according to claim 16, **characterized in that** the loudspeaker assembly further has a back surface, which is connected to the sound-emitting surface, is configured as a convex spherical surface, and has a spherical center, and a rotation axis of the loudspeaker assembly extends through the spherical center;
a cavity wall of the mounting cavity comprises a spherical wall surface, and a spherical center of the spherical wall surface coincides with the spherical center of the back surface.

20. The electronic product according to claim 19, **characterized in that** the cavity wall of the mounting cavity further comprises an inclined wall surface, which is connected to the spherical wall surface, and an end of which distant from the spherical wall surface encloses the mounting opening;
wherein the inclined wall surface flares outwardly in a direction from a cavity bottom of the mounting cavity toward the mounting opening.

21. The electronic product according to claim 20, **characterized in that** it is defined that the electronic product has an up-down orientation, and the mounting opening is upwardly disposed;
on a vertical section, defining an angle formed between the inclined wall surface and the up-down orientation as y, which satisfies a relationship: 40° ≤ γ ≤ 70°, and/or, defining a depth of the mounting cavity as D, and a projection length of the inclined wall surface in the up-down orientation as d, which satisfies a relationship: 0.1 ≤ d/D ≤ 0.4.

22. The electronic product according to claim 16, **characterized in that** it is defined that the electronic product has an up-down orientation, and the mounting opening is upwardly disposed;
when the loudspeaker assembly is rotated to a preset rotation stroke, an angle formed between a center line of the loudspeaker assembly extending through the sound-emitting surface and a horizontal direction is Z, which satisfies a relationship: 0° ≤ Z ≤ 20°.

23. The electronic product according to any one of claims 1 to 11, **characterized in that** the product body, when rotating, is rotatable along a first direction or a second direction opposite to the first direction, and defining a preset rotation stroke of the product body as X; when the product body is rotated along the first direction, satisfying a relationship: 250° ≤ X ≤ 270°, and when the product body is rotated along the second direction, satisfying a relationship: 90° ≤ X ≤ 110°;
and/or, noise generated by the product body during rotation is less than or equal to 30 dB;
and/or, defining time for the product body to rotate to the preset rotation stroke as T, which satisfies a relationship: 2s ≤ T ≤ 4s.

24. The electronic product according to any one of claims 1 to 11, **characterized in that** the electronic product further comprises a position recognizer and a rotation controller, and the position recognizer is configured to recognize a target position where a user is located;
the rotation controller is configured to control a rotation angle of the product body according to recognition information from the position recognizer, so that the product body faces towards the target position.
